# EUROPEAN PATENT SPECIFICATION

(11) **EP 3 231 293 B1**
(45) Date of publication and mention of the grant of the patent: **04.11.2020**
(21) Application number: 15868565.1
(22) Date of filing: 30.11.2015
(51) Int. Cl.: A23L 2/02, A23L 2/00, A23L 29/00, A23L 33/10, A23L 33/20, A23L 33/21, A23L 5/20

(54) **METHOD OF PRODUCING A REDUCED-CALORIE FRUIT JUICE OR VEGETABLE JUICE BEVERAGE**
HERSTELLUNGSMETHODE FÜR EIN KALORIENREDUZIERTES FRUCHT- ODER GEMÜSESAFTGETRÄNK
PROCÉDÉ DE PRODUCTION D'UNE BOISSON DE JUS DE FRUITS OU DE JUS DE LÉGUMES ALLÉGÉE EN CALORIES

(30) Priority: 09.12.2014 JP 2014249258
(43) Date of publication of application: 18.10.2017
(73) Proprietor: Kirin Holdings Kabushiki Kaisha, Tokyo 164-0001 (JP)
(72) Inventor: ICHIKAWA, Shintaro, Tokyo 164-0001 (JP)
(74) Representative: Hoffmann Eitle
(86) International application number: PCT/JP2015/005934
(87) International publication number: WO 2016/092768

(56) References cited:
- WO-A1-2012/059554
- JP-A- H04 229 186
- JP-A- H08 173 109
- JP-A- S61 146 192
- JP-A- 2009 159 818
- JP-A- 2009 516 527
- JP-A- 2010 518 817
- US-A1- 2011 293 782
- US-A1- 2013 196 029
- US-A1- 2013 216 652
- MARIA FRANCISCA SIMAS TEIXEIRA ET AL: "Quality Attributes of Cupuaçu Juice in Response to Treatment with Crude Enzyme Extract Produced by Aspergillus japonicus 586", ENZYME RESEARCH, vol. 2011, 1 May 2011 (2011-05-01), pages 1-6, XP055483404, DOI: 10.4061/2011/494813
- HANG, Y. D. ET AL.: 'Fructosyltransferase Activity of Commercial Enzyme Preparations Used in Fruit Juice Processing' BIOTECHNOLOGY LETTERS vol. 17, no. 7, 01 July 1995, pages 741 - 744, XP055454630 DOI: 10.1007/BF00130361

## Description

### TECHNICAL FIELD

The present disclosure relates to reduced-calorie fruit juice or vegetable juice obtained by reducing the calorie of fruit juice or vegetable juice while maintaining the flavor and juice liquid properties of the fruit juice or vegetable juice, a beverage containing the fruit juice or vegetable juice, and methods for producing the same.

### BACKGROUND ART

Conventionally, fruit juice or vegetable juice beverages have widely been preferred from the viewpoint of their flavor and, further, maintenance and enhancement of health, contribution to beauty care and beautiful skin, etc. In fact, such fruit juice or vegetable juice beverages contain many health functional materials such as vitamins, minerals and dietary fibers in addition to various nutrients.

Among fruit juice/vegetable juice beverages, beverages fundamentally consisting only of fruit juice or vegetable juice, i.e., 100% fruit juice or vegetable juice beverages are especially preferred because of their flavor and natural feeling and high expectation to health functionality.

On the other hand, in response to the enhanced diet trend and health trend in eating habits in recent years, the market of reduced-calorie beverages is being established also in the field of beverages, and the demand for reduction in calories and saccharides is increasing also in fruit juice or vegetable juice beverages from this direction.

In general, when the calorie of a beverage is reduced, the calorie can be reduced and, further, adjusted to zero merely by suppressing the amount of sucrose or isomerized sugar to be added as a sweetener or by using low-calorie sweeteners such as various sugar alcohols or high-intensity sweeteners such as sucralose, in place of sucrose or isomerized sugar. In the case of fruit juice or vegetable juice beverages, however, fruit juice or vegetable juice itself originally contains saccharides such as sucrose and fructose. If the amount of the fruit juice or vegetable juice to be used, itself, is reduced in order to reduce the saccharides, its intrinsic flavor and various nutrients and its original health functionality would be impaired as much as the amount thereof reduced.

Then, selective removal of saccharides contained in fruit juice or vegetable juice has been attempted. For example, Patent Document 1 discloses a method for producing low-calorie juice by mixing unfiltered fruit juice with saccharide-reduced fruit juice that is obtained by filtering fruit juice through an ultrafiltration membrane. Patent Document 2 discloses a method for obtaining fruit juice having a high saccharide/acid ratio or a low saccharide concentration by using an ultrafiltration membrane and a nanofiltration membrane in combination. These methods, however, involved the problem that the intrinsic flavor of fruit juice or vegetable juice would be spoiled due to non-selective removal of other low molecular components together with saccharides.

On the other hand, conversion of saccharides in juice or vegetable juice into lower-calorie substances through enzyme treatment has also been attempted. Patent Document 3 discloses a method for producing a liquid food material which contains a fructooligosaccharide produced by causing a crude enzyme preparation with fructosyl transferase activity prepared from a microorganism such as *Aspergillus niger* to act on a sucrose-containing agricultural product, as a raw material, such as carrot juice or a squeezed sugar cane liquid. Also, Patent Document 4 discloses a food or beverage product, such as juice, which has realized the reduction in sucrose concentration level and the improvement in concentration level of soluble dietary fibers due to the production of a fructooligosaccharide, simultaneously, by treating sucrose which is contained in a sucrose-containing food or beverage product such as fruit juice with a crude enzyme preparation having fructosyl transferase activity derived from *Aspergillus japonicas.*

The fructooligosaccharide is an oligosaccharide in which fructose binds to sucrose by β-(2,1) bonds, and is known to have about half calorie and sweetness of sucrose, to have properties which are similar to those of dietary fibers, and also to have physiological functions and health functions such as the functions of promoting the proliferation of lactic acid bacteria and bifidobacteria, promoting enteric microorganisms, suppressing pathogenic bacteria, promoting bowel activity and immune-enhancement. Patent Documents 3 and 4, as indicated above, are considered to relate to very promising techniques involving producing a fructooligosaccharide with health functionality while reducing the sucrose content to reduce the saccharides and calorie, thereby imparting a new value. However, there has not been known any case where these techniques were used in actual beverage production and the thus-produced beverage was commercialized as an article of commerce.

As another technique which utilizes conversion of sugar by an enzyme, Patent Document 5 discloses a method comprising causing a crude enzyme preparation with levan sucrase activity derived from *Zymomonas mobilis* to act on squeezed juice or crushed puree of fruit, thereby producing levan in which 10 or more sugar chains are connected in the raw material fruit juice or puree. Levan has half calorie of sucrose, like fructooligosaccharide, and low-calorie fruit juice or puree can be obtained by this method. However, levan neither has as clear health functionality as fructooligosaccharide, nor exhibits sweetness. So, the reduction in quality of taste cannot disadvantageously be avoided.

### Reference List

### Patent Documents

Patent Document 1: JPA 271980/1998
Patent Document 2: JPT 503480/1994 (JPB 2725889)
Patent Document 3: JPA 173109/1996 (JPB 2852206)
Patent Document 4: JPT 516527/2009
Patent Document 5: JPT 518817/2010 (JPB 5094880)
Patent Document 6: US 20130216652 refers to intrinsic sugar reduction of juices and ready to drink products

### SUMMARY OF INVENTION

The problem to be solved by the present invention resides in the provision of a reduced-calorie fruit juice or vegetable juice beverage containing a fructooligosaccharide, in which the saccharides and thus calorie of a beverage containing fruit juice or vegetable juice are reduced while the flavor and juice liquid properties of the fruit juice or vegetable juice are sufficiently maintained, and, in addition, which has enhanced health functionality as compared with the beverage containing the fruit juice or vegetable juice. The "reduction of calorie" or "calorie reduction" referred to herein encompasses reduction of saccharides or saccharide reduction.

While the present inventors studied a method comprising treating fruit juice or vegetable juice with a crude enzyme preparation of fructosyl transferase to *in situ* convert sucrose which exists therein into a fructooligosaccharide, thereby reducing the calorie of a beverage, they have found the problem that the crude enzyme preparation of fructosyl transferase conventionally used in the enzyme reaction causes the clarification of the fruit juice or vegetable juice and the reduction in feeling of richness due to other enzyme activities which are also possessed by the enzyme preparation, leading to adverse effects on the flavor and juice liquid properties. Also, the present inventors have found that, through finding and utilization of a crude enzyme preparation of fructosyl transferase which has substantially no pectinase activity and does not cause clarification in order to solve the problem, there can be produced a reduced-calorie fruit juice or vegetable juice beverage which suppresses changes in flavor and juice liquid properties of the fruit juice or vegetable juice and maintains the flavor and juice liquid properties, and, at last, have completed the present invention.

Specifically, the present disclosure relates to reduced-calorie fruit juice or vegetable juice which contains a fructooligosaccharide and maintains the flavor and juice liquid properties of fruit juice or vegetable juice, the reduced-calorie fruit juice or vegetable juice being characterized in that the fruit juice or vegetable juice is treated with a crude enzyme preparation of fructosyl transferase having substantially no pectinase activity; a beverage which contains the reduced-calorie fruit juice or vegetable juice; and methods for producing them.

The present invention encompasses a method for producing a reduced-calorie fruit juice or vegetable juice beverage as claimed which maintains the flavor and juice liquid properties of fruit juice or vegetable juice, the method being characterized in that the fruit juice or vegetable juice is treated with a crude enzyme preparation of fructosyl transferase having substantially no pectinase activity.

The present invention also encompasses a method for reducing the calorie of a fruit juice or vegetable juice beverage as claimed which maintains the flavor and juice liquid properties of fruit juice or vegetable juice, the method being characterized in that the fruit juice or vegetable juice is treated with a crude enzyme preparation of fructosyl transferase having substantially no pectinase activity, thereby specifically converting sucrose which is contained in the fruit juice or vegetable juice into a fructooligosaccharide while maintaining the flavor and juice liquid properties of the fruit juice or vegetable juice.

The present disclosure provides a reduced-calorie fruit juice or vegetable juice beverage, in which the calorie of a fruit juice or vegetable juice beverage, such as a 100% fruit juice or vegetable juice beverage, is reduced while the favor and juice liquid properties of fruit juice or vegetable juice is maintained.

### BRIEF DESCRIPTION OF DRAWINGS

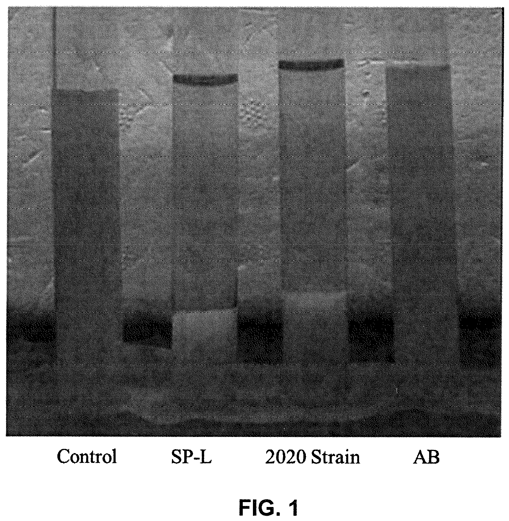

FIG. 1 shows clarification states of orange juice subjected to various types of enzyme treatment in a "Fruit juice treatment test with various crude enzyme preparations" in the Examples of the present invention.

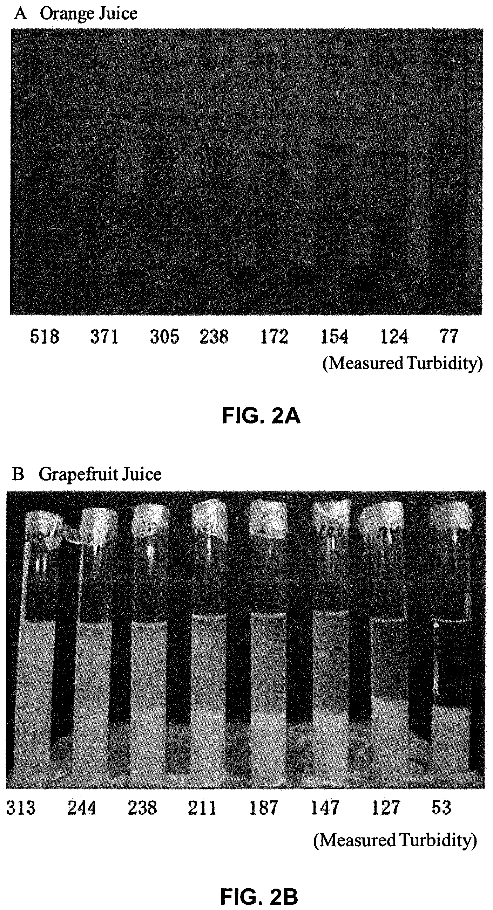

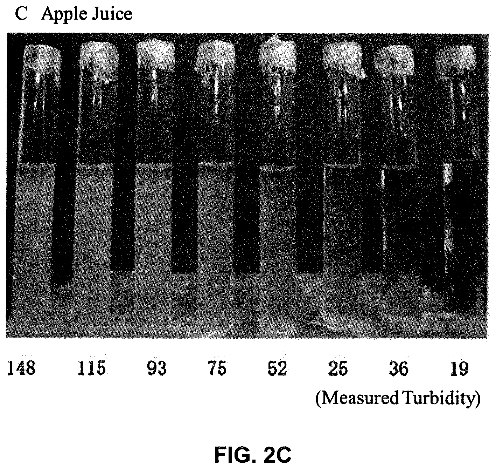

FIG. 2 shows the relationship between clarification degree and turbidity for orange juice, grapefruit juice and apple juice in a test on "Relationship between clarification and turbidity" in the Examples of the present invention, in which FIGs. 2A, 2B and 2C show photographs of the appearance states in terms of clarification at the respective measured turbidities, for orange juice, grapefruit juice and apple juice, respectively.

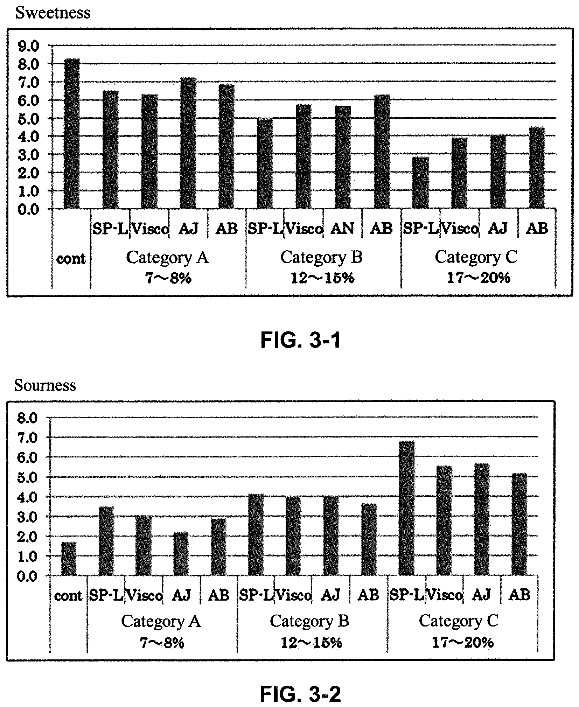

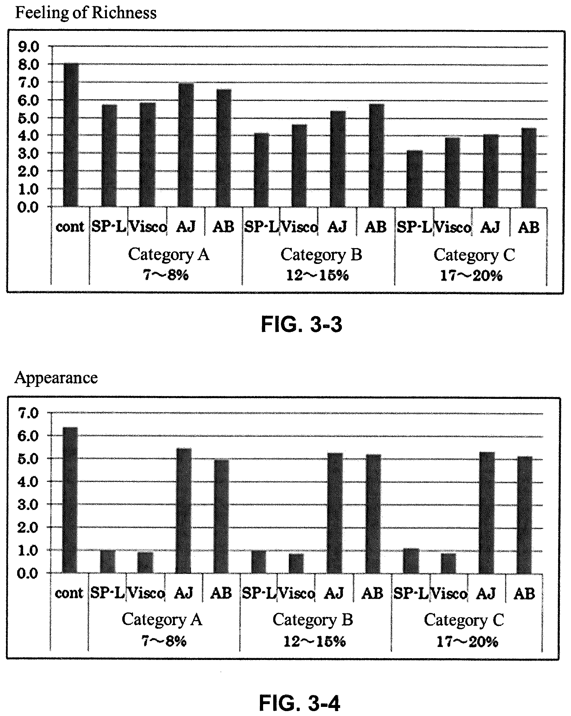

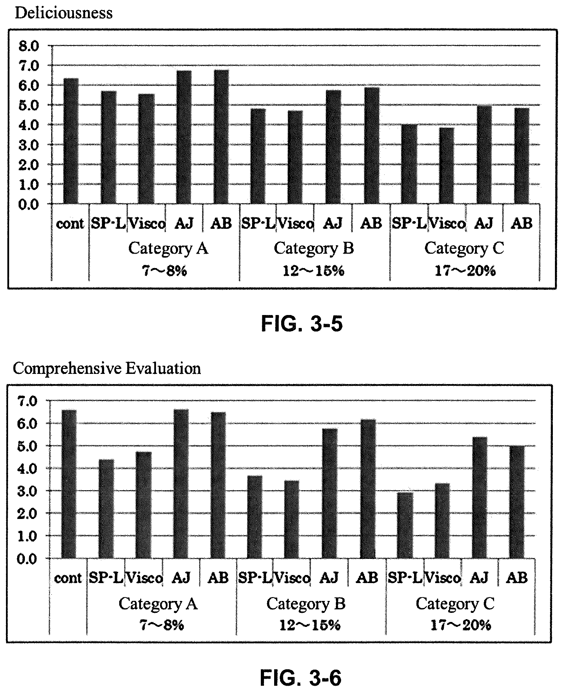

FIG. 3 shows graphs of sensory evaluation results of orange juice subjected to various types of enzyme treatment in a test on "Appearance and sensory evaluation of FTase crude enzyme-treated fruit juice" in the Examples of the present invention, in which FIGs. 3-1, 3-2, 3-3, 3-4, 3-5 and 3-6 show sensory evaluation results of "sweetness," "sourness," "feeling of richness," "appearance," "deliciousness" and "comprehensive evaluation," respectively.

### DETAILED DESCRIPTION OF THE INVENTION

### <Fruit juice or vegetable juice for use in production>

Any kinds of fruit juice containing sucrose may be used as raw materials for the fruit juice to be used in the production of the reduced-calorie fruit juice or vegetable juice according to the present invention, and examples thereof include fruit juice of orange (including mandarin orange), grapefruit, apple, grape, peach, strawberry, banana, pineapple and mango and other kinds of fruit juice which are indicated in the Quality Labeling Standard for fruit juice beverage products. Particularly preferred raw materials for the fruit juice are orange, grapefruit and apple. Also, any kinds of vegetable juice containing sucrose may be used as raw materials therefor, and examples thereof include vegetable juice of carrot, spinach, onion, tomato, celery, paprika, pumpkin and corn. A particularly preferred raw material for the vegetable juice is carrot.

The fruit juice or vegetable juice to be used in the production of the reduced-calorie fruit juice or vegetable juice beverage according to the present invention may be mixed juice comprising two or more of the above-indicated fruit juice raw materials or vegetable juice raw materials, and also may be mixed juice comprising a mixture of fruit juice and vegetable juice.

From the viewpoint of attaching importance to the flavor and juice liquid properties of the fruit juice or vegetable juice, the reduced-calorie fruit juice or vegetable juice used desirably maintains the original color tone and feeling of richness of the fruit juice or vegetable juice. Both of straight fruit juice or vegetable juice and concentrated one can be used in the production of the reduced-calorie fruit juice or vegetable juice beverage according to the method of the present invention. When the target fruit juice or vegetable juice beverage has a low concentration, diluted fruit juice or vegetable juice which has been mixed with water or any other drinkable liquid can also be used.

### <Crude enzyme preparation>

The crude enzyme preparation to be used in the production of the reduced-calorie fruit juice or vegetable juice beverage according to the method of the present invention is a crude enzyme preparation of fructosyl transferase having the activity of producing a fructooligosaccharide from sucrose and having substantially no pectinase activity. The phrase "having substantially no pectinase activity" means that the crude enzyme preparation has no activity of causing remarkable clarifying effect or viscosity reducing effect when the fruit juice or vegetable juice is treated therewith. Particularly, in the case where an enzyme treatment test is carried out using orange juice as described in Test 1 in the Examples herein, the crude enzyme preparation is regarded as having substantially no pectinase activity, when fructooligosaccharide is produced at a proportion of 10% or more of the saccharide composition and, additionally, when the turbidity after treatment is maintained at 35% or more of the turbidity before treatment. The phrase "crude enzyme preparation" means an enzyme preparation which is commonly employed in enzyme preparations sold for industrial production of food products and which is obtained by using a relatively inexpensive and safe reagent and a separating and extracting means such as filtration membrane separation, and does not include enzyme preparations prepared by using a high-level and expensive separating and purifying means such as fractionation and purification by liquid chromatography or the like. The crude enzyme preparation used in the method of the present invention can be prepared according to the production method disclosed in Test 1 in the Examples herein.

### <Method for treating crude enzyme preparation and method for producing reduced-calorie fruit juice or vegetable juice>

The treatment with the crude enzyme preparation to be used in the production method of the reduced-calorie fruit juice or vegetable juice beverage according to the present invention involves adding the crude enzyme preparation so as to attain at least 1 U per g of sucrose contained in the fruit juice or vegetable juice, as a rough indication. The crude enzyme preparation is added so as to attain preferably 5 U/g of sucrose, particularly preferably 10 U/g of sucrose. After addition of the crude enzyme preparation, the fruit juice or vegetable juice is reacted therewith at 25°C for 24 hours, as a rough indication. The temperature and time can appropriately be adjusted depending on the kind of the fruit juice or vegetable juice and the amount of the enzyme to be added, but it should be noted that a long-term reaction at a high temperature would cause degradation of sugar. In the case where two or more kinds of fruit juice or vegetable juice are used (for example, mixed juice), there can be employed both of a method comprising treating them individually with the crude enzyme preparation and then mixing them together and a method comprising mixing them together and then treating the mixture with the crude enzyme preparation. The treatment, when applied to concentrated fruit juice or vegetable juice, may be carried out at any timing of before, during and after concentration.

### <Reduced-calorie fruit juice or vegetable juice>

The reduced-calorie fruit juice or vegetable juice of the present disclosure is reduced-calorie fruit juice or vegetable juice which contains a fructooligosaccharide and maintains the flavor and juice liquid properties of fruit juice or vegetable juice, the reduced-calorie fruit juice or vegetable juice being obtained by treating the juice or vegetable juice with a crude enzyme preparation of fructosyl transferase having substantially no pectinase activity. The fructooligosaccharide content of the reduced-calorie fruit juice or vegetable juice according to the present disclosure can be adjusted depending on the kind of the fruit juice or vegetable juice and its sucrose content and the degree of treatment with the crude enzyme preparation, and an effective amount of the fructooligosaccharide is said to be 3 to 8 g/day. From the viewpoint of imparting the health functionality such as the effect of regulating the intestinal function, the fructooligosaccharide is preferably contained in an amount of 0.6 g/100 ml or more, preferably 1.2 g/100 ml or more when the Brix of the juice is adjusted to 100% according to the Quality Labeling Standard for fruit juice beverage products or the Japan Agricultural Standards for fruit beverages.

The reduced-calorie fruit juice or vegetable juice of the present disclosure has turbidity or viscosity of the fruit juice or vegetable juice maintained at a high level. The rate of the turbidity of the fruit juice or vegetable juice after enzyme treatment to the turbidity thereof before enzyme treatment, i.e., turbidity maintenance rate, is 35% or more, preferably 50% or more, particularly preferably 70% or more. The reduced-calorie fruit juice or vegetable juice of the present disclosure may be straight fruit juice or vegetable juice which would not undergo any concentration step or concentrated fruit juice or vegetable juice having, for example, Brix of 33° or 66° in consideration of the storing and transporting efficiency.

### <Beverage and method for producing the same

The fruit juice or vegetable juice beverage in the present disclosure is a beverage containing the reduced-calorie fruit juice or vegetable juice of the present disclosure, and includes beverages comprising the reduced-calorie fruit juice or vegetable juice of the present disclosure. Preferably, there can be indicated a 100% fruit juice or vegetable juice beverage obtained by adjusting the reduced-calorie fruit juice or vegetable juice of the present disclosure so as to have a Brix value equivalent to that of 100% fruit juice or 100% vegetable juice. Also, low- or non-calorie, high-intensity sweeteners such as various sugar alcohols, sucralose or acesulfame-K as well as food additives which can be added to the beverage, such as acidulants and thickeners, may be added as appropriate. The beverage can also be prepared as a packaged beverage filled and sterilized in a PET bottle or a paper container. Except that the raw material fruit juice or vegetable juice is subjected to enzyme treatment, the claimed beverage has no difference, in production method, from conventional fruit juice or vegetable juice beverages, and thus can be produced with reference to related books such as "Soft Drinks" (Kabushiki Kaisha Korin).

Hereinafter, the present invention will be described in more detail by way of the Examples.

### EXAMPLES

### <Test Example 1: Fruit juice treatment test with various crude enzyme preparations>

Various crude enzyme preparations having fructosyl transferase activity were prepared and used to treat fruit juice for comparison of their enzyme activities and their effects on the juice liquid properties of the treated fruit juice.

### (Preparation and acquisition of enzymes)

A commercial crude enzyme preparation, Pectinex Urtra SP-L (Novozymes), which is described as a crude enzyme preparation having desirable FTase activity in Patent Document 4, was acquired (crude enzyme preparation SP-L). Further, an *Aspergillus niger* IAM2020 strain, which is described as a fructosyl transferase (FTase)-producing strain in Patent Document 3 and used in the Examples thereof, was acquired (this strain was transferred to JCM and is stored as JCM5546, which is referred to as the "2020 strain" herein). This 2020 strain was cultured and extracted in accordance with the method described in Example 5 of Patent Document 3, thereby obtaining a crude enzyme preparation, 2020 strain. A solution containing 1 w/v% of peptone, 1 w/v% of a meat extract and 0.5 w/v% of NaCl was autoclaved to prepare a culture fluid (Medium (2): medium number indicated in the patent). The strain was inoculated in this culture fluid and subjected to static culture at 30°C for 9 days. The fungus body was recovered, and PBS was added in an amount four times the wet weight. The fungus was crushed with a homogenizer. This was allowed to stand for 2 days. The digestive fluid was concentrated five times through an ultrafiltration filter. This concentrated fluid was used as a crude enzyme liquid. Also, a crude enzyme preparation AB was obtained from an *Aureobasidium* fungus (deposited as FERM-P No. 4257) used in JPB 3173805 which discloses a method for producing a fructooligosaccharide-containing syrup, by using the culturing/extracting method described in this patent publication.

### (Measurement of fructosyl transferase activity of crude enzyme preparation)

The respective prepared/acquired crude enzymes were added to 40 mM of a sodium acetate buffer containing 10% sucrose and having a pH of 5.0 to cause a reaction at 40°C. After one hour, the enzyme was thermally deactivated, and the saccharide composition was analyzed by HPLC. The transfer activity (Ut) was calculated through measurement of the amounts of kestose and nystose produced, and the degradation activity (Uh) was calculated through measurement of the amount of fructose produced. The "U" was defined as enzyme activity of producing 1 µmol of molecules per minute, according to the common definition.

### (Reaction with orange juice)

The four FTase crude enzyme preparations provided, SP-L, 2020 strain and AB (100 U, each), respectively, were added to 100 g of concentrated orange juice (Brix 33°) to cause a reaction at 25°C for 24 hours. After the reaction, the enzymes were thermally deactivated, and the juice liquids were adjusted to have Brix 11°. Then, various measurements were made (crude enzyme preparations SP-L, 2020 strain and AB). A control section without addition of an enzyme was also provided.

### (Analysis of saccharide composition of fruit juice)

The composition of the saccharides contained in the respective fruit juice or vegetable juice samples was analyzed under the following conditions by HPLC (Shimadzu Corporation). Specifically, each of the juice liquid samples was diluted with water to prepare a solution containing about 2% of saccharides. The centrifugal supernatant was filtered, and the filtrate was mixed with acetonitrile, thereby preparing a 50% acetonitrile solution. This solution was analyzed by HPLC to calculate the saccharide concentration. Asahipak NH2P-50 4E (Shodex) was used as a column for HPLC analysis. The column temperature was 30°C; the flow rate was 1 ml/min; and the mobile phase was a 70% acetonitrile solution. A differential refractive index detector was used for detection of the saccharides.

### (Measurement of turbidity)

The fruit juice obtained through the enzyme reaction was allowed to stand at 4°C for 2 days to assess the appearance thereof as to whether the fruit juice was clarified or not. Also, the turbidity was obtained by centrifuging 800 g of each of the samples at an ordinary temperature for 10 minutes, measuring the OD₆₅₀ of the supernatant with a spectrophotometer (GeneQuant 1300, GE), and, thereafter, converting the measurement value into turbidity based on the OD-turbidity compensation formula obtained from the OD measurement for a diluted solution of a kaolin turbidity standard solution (turbidity: 1000) (Wako Pure Chemical Industries, Ltd.).

### (Clarification)

The clarification was assessed from the appearance observation as follows: the case where clarification was clearly observed was ranked as "clarified," and the case where the samples were indistinguishable from the Control was ranked as "not clarified."

### (Results)

Table 1 indicates the results. FIG. 1 shows whether the respective samples were clarified or not after the reaction.

**[Table 1]**

| Crude enzyme preparation | Saccharide composition (% concentration) | | | Turbidity | Clarification |
|---|---|---|---|---|---|
| | Monosaccharide | Disaccharide | Oligosaccharide | | |
| Control (with no enzyme) | 50.3 | 49.7 | 0.0 | 655 | Not clarified |
| SP-L | 62.6 | 22.7 | 14.7 | 57 | Clarified |
| 2020 Strain | 79.1 | 17.5 | 3.4 | 57 | Clarified |
| AB | 63.3 | 19.1 | 17.6 | 507 | Not clarified |

The production of fructooligosaccharide was confirmed in all the sections of crude enzyme preparations SP-L, 2020 strain and AB. The crude enzyme preparation B (derived from the 2020 strain) prepared in accordance with Patent Document 3 had the FTase activity level (5.1 Ut/ml, 1.5 Uh/ml, 3.4 Ut/Uh) described in this publication, but this FTase activity was low and insufficient as compared with those of the other crude enzyme preparations acquired this time. The crude enzyme preparations SP-L and 2020 strain provided remarkably lowered turbidity as compared with the control section, and also provided clarified appearance. Such clarification is considered to have been caused by the pectinase activity which is possessed, concurrently with the FTase activity, by these enzymes. Whereas, the samples prepared by using the crude enzyme preparation AB maintained sufficient turbidity as compared with the control section, and no clarification was observed in appearance.

In view of the above, it was revealed that the crude enzyme preparation, with which fruit juice or vegetable juice has conventionally been treated, has the effect of clarifying fruit juice together, and is practically problematic from the viewpoint of seeking the juice liquid properties similar to those of 100% fruit juice or vegetable juice. Also, the presence of a crude enzyme preparation having sufficient FTase activity and causing no clarification, i.e., having substantially no pectinase activity was revealed for the first time in this test.

### <Test 2: Screening for FTase crude enzyme preparation having substantially no pectinase activity>

Test 1 verified the presence of an FTase crude enzyme preparation which is especially suitable for application to fruit juice or vegetable juice and has substantially no pectinase activity. Then, it was reviewed whether a similar crude enzyme preparation was obtained from the strains possessed.

### (Method)

As for the respective *Aspergils* strains possessed, crude enzyme preparations were obtained by using the culturing/extracting method described in JPB 3173805 (involving culturing the fungus bodies, then breaking down their cell membrane and further concentrating/purifying them by ultrafiltration) as with the crude enzyme preparation AB in Test 1. The obtained crude enzyme preparations were used to be reacted with orange juice by the same method as that used in Test 1, thereby measuring the saccharide composition and turbidity and assessing the clarification.

### (Results)

As a result of reviews, it was found that the crude enzyme preparation AJ derived from one strain of *Aspergullus japonicas* causes no clarification, i.e., has substantially no pectinase activity and has high FTase activity similar to that of the crude enzyme preparation AB. Therefore, this crude enzyme preparation AJ would be used together with the crude enzyme preparation AB in the following tests. From the results of this test, it was seen that the screening carried out by the above procedures enables selection of a crude enzyme preparation having substantially no pectinase activity and having fructosyl transferase activity from various strains.

### <Test 3: Evaluation of each of crude enzyme preparations in various fruit juice >

The respective FTase crude enzyme preparations were evaluated for fruit juice other than orange juice.

### (Method)

The three crude enzyme preparations "SP-L", "AJ" and "AB" used in Tests 1 and 2 were each added to concentrated orange juice, concentrated apple juice and concentrated grapefruit juice which were adjusted to have Brix 33° so as to attain 1 U/ml, thereby causing a reaction at 25°C for 24 hours. The juice liquids were allowed to stand at 90°C for 10 minutes for deactivation of the enzymes, and the Brix values of the respective juice liquids were adjusted to correspond to that of 100% fruit juice (orange=Brix 11°, apple=Brix 10° and grapefruit=Brix 9°). Then, the saccharide composition and turbidity were measured in the same way as in Test 1 to assess the clarification.

### (Results)

In all the kinds of fruit juice, oligosaccharide was produced as indicated in Table 2. However, the amounts of the oligosaccharide produced were different among the kinds of fruit juice, depending on the proportion of sucrose originally contained in the respective kinds of fruit juice. Also, when the crude enzyme preparation "SP-L" was used, clarification took place in all of orange juice, grapefruit juice and apple juice. On the other hand, when the crude enzyme preparations AJ and AB were used, somewhat decrease in turbidity was observed, but clarification could not be recognized in appearance.

**[Table 2]**

| Kind of fruit juice | Section | Saccharide composition (%) | | | Turbidity | Clarification |
|---|---|---|---|---|---|---|
| | | Monosaccharide | Disaccharide | Oligosaccharide | | |
| Orange | Control (with no enzyme treatment) | 51.5 | 48.5 | 0.0 | 629 | Not clarified |
| | SP-L | 63.7 | 21.7 | 14.6 | 37 | Clarified |
| | AJ | 64.9 | 20.1 | 15.0 | 554 | Not clarified |
| | AB | 63.4 | 19.2 | 17.4 | 580 | Not clarified |
| Grapefruit | Control | 70.7 | 29.3 | 0.0 | 310 | Not clarified |
| | SP-L | 78.2 | 18.9 | 2.9 | 51 | Clarified |
| | AJ | 79.7 | 16.7 | 3.6 | 294 | Not clarified |
| | AB | 76.8 | 20.7 | 2.6 | 291 | Not clarified |
| Apple | Control | 76.8 | 23.2 | 0.0 | 184 | Not clarified |
| | SP-L | 83.5 | 12.5 | 4.0 | 39 | Clarified |
| | AJ | 83.5 | 11.7 | 4.7 | 123 | Not clarified |
| | AB | 83.4 | 11.6 | 5.0 | 120 | Not clarified |

### <Test 4: Relationship between clarification and turbidity>

The crude enzyme preparation "SP-L" used in Test 1 is commercially available as pectinase. This crude enzyme preparation was used to prepare various kinds of fruit juice which were different in pectinase treatment level, and a test was conducted to examine the level of turbidity at which clarification is permitted in appearance, i.e., the relationship between the turbidity level and the clarification level.

### (Method)

The crude enzyme preparation "SP-L" used in Test 1 was added to concentrated orange juice, concentrated grapefruit juice and concentrated apple juice, respectively, which were adjusted to have Brix 33° so as to attain 1 U/ml, thereby causing a reaction at 25°C for 24 hours. The juice liquids were allowed to stand at 90°C for 10 minutes for deactivation of the enzyme, and then those kinds of treated fruit juice and fruit juice with no enzyme treatment (Control) were diluted to a Brix value equivalent to that of 100% fruit juice, and mixed at a plurality of stages from 7000 µl:0 µl to 0 µl:7000 µl as indicated in Table 3 to create the turbidity stages from high to low. The turbidities at the respective stages were measured (measured turbidity), and the turbidity rate relative to the Control (turbidity maintenance rate (%)) was calculated. Further, the clarification level was evaluated in four grades: ⊚: Clarification did not take place or was not prominent; ○: Clarification was well suppressed; Δ: Clarification was suppressed; and ×: Clarification took place.

### (Results)

Orange juice exhibited high turbidity in the case of the Control and a somewhat wide acceptable range for the turbidity maintenance rate relative to the Control, as compared with the other two kinds of fruit juice. However, clarification was observed but suppressed when the turbidity maintenance rate relative to the fruit juice with no enzyme treatment was 35% or more, irrespective of the kind of fruit juice. Clarification was well suppressed when the turbidity level was 50% or more, and did not take place or was not prominent when the level was 70% or more. It can be determined that, in these experimental sections, the juice liquid properties are maintained as compared with those of the fruit juice with no enzyme treatment. FIG. 2 shows a photograph of the appearance state concerning the relationship between clarification and turbidity. In FIG. 2, FIGs. 2A, 2B and 2C show photographs of the appearance states in terms of clarification at the respective measured turbidities, for orange juice, grapefruit juice and apple juice, respectively.

**[Table 3]**

| Kind of fruit juice | Mixing proportion (µl) | | Measured turbidity | Turbidity maintenance rate (relative to control) | Clarification |
|---|---|---|---|---|---|
| | Control | SP-L | | | |
| Orange | 7000 | 0 | 580 | 100.0 | ⊚ |
| | 6222 | 778 | 518 | 89.3 | ⊚ |
| | 5444 | 1556 | 476 | 82.0 | ⊚ |
| | 4667 | 2333 | 429 | 73.8 | ⊚ |
| | 3889 | 3111 | 371 | 63.9 | ⊚ |
| | 3111 | 3889 | 305 | 52.5 | ⊚ |
| | 2333 | 4667 | 238 | 40.9 | ○ |
| | 1944 | 5056 | 172 | 29.7 | × |
| | 1556 | 5444 | 154 | 26.5 | × |
| | 1167 | 5833 | 124 | 21.4 | × |
| | 778 | 6222 | 77 | 13.2 | × |
| | 389 | 6611 | 54 | 9.4 | × |
| | 0 | 7000 | 31 | 5.3 | × |
| Grapefruit | 7000 | 0 | 313 | 100.0 | ⊚ |
| | 6352 | 648 | 292 | 93.3 | ⊚ |
| | 5704 | 1296 | 283 | 90.3 | ⊚ |
| | 5056 | 1944 | 261 | 83.3 | ⊚ |
| | 4407 | 2593 | 244 | 78.0 | ⊚ |
| | 3759 | 3241 | 238 | 75.9 | ⊚ |
| | 3111 | 3889 | 211 | 67.2 | ○ |
| | 2463 | 4537 | 187 | 59.5 | ○ |
| | 1815 | 5185 | 147 | 46.9 | Δ |
| | 1167 | 5833 | 127 | 40.5 | Δ |
| | 519 | 6481 | 77 | 24.5 | × |
| | 0 | 7000 | 53 | 17.0 | × |
| Apple | 7000 | 0 | 148 | 100.0 | ⊚ |
| | 5906 | 1094 | 115 | 77.2 | ⊚ |
| | 4813 | 2188 | 93 | 62.3 | ⊚ |
| | 3719 | 3281 | 75 | 50.7 | ○ |
| | 2625 | 4375 | 52 | 35.2 | Δ |
| | 1531 | 5469 | 25 | 16.5 | × |
| | 438 | 6563 | 36 | 24.4 | × |
| | 0 | 7000 | 19 | 13.0 | × |

### <Test 5: Appearance and sensory evaluation of FTase crude enzyme-treated fruit juice>

The appearance and sensory evaluation of the fruit juice treated with the FTase crude enzyme preparations were tested as follows.

### (Method)

The following four crude enzyme preparations were used: SP-L; "Viscozyme" (Novozymes, hereinafter referred to as the "crude enzyme preparation Visco") having both of FTase activity and pectinase activity as with SP-L; and the crude enzyme preparations AJ and AB produced by the present inventors. The respective crude enzyme preparations were each added to 120 ml of concentrated orange juice having Brix 33° so as to attain 1 U/ml, thereby causing a reaction at 25°C and at three-stage reaction times for a period of time ranging from 4 to 24 hours so that the fructooligosaccharide concentration was about 7 to 8% (Category A), about 12 to 15% (Category B) or about 17 to 20% (Category C). The respective juice liquids were diluted with water to Brix 11° which was equivalent to that of 100% fruit juice, thereby preparing 12 samples to be tasted, in total. The samples were each put in a bottle, and retained for 10 minutes after the temperature thereof arrived at 80°C in a water bath, for deactivation of the enzyme activity. Orange juice with no enzyme treatment adjusted to have Brix 11° was used as the control section.

### (Measurement and sensory evaluation)

The measurement of the saccharide composition and turbidity and the observation of the appearance, for the samples to be tasted, were carried out in the same way as in the above tests. The viscosities of the samples to be tasted were measured by centrifuging the fruit juice at 8000 rpm (Gmax: 8340 g, Gmin: 4250 g) and measuring the supernatant with a viscometer (Automated micro viscometer, manufactured by Amton Paar). The capillary used had a diameter of 1.6 mm, and the ball used had a diameter of 1.5 mm (7.850 g/cm³). The sensory evaluation was made by six trained panelists, and the evaluation items were "sweetness," "sourness," "feeling of richness" "appearance (as orange juice)" "deliciousness" and "comprehensive evaluation (including appearance)." The panelists evaluated the samples for the respective items while ranking strong (good) as 10 and weakest (bad) as 0, and marked the evaluation results at any positions on straight lines for numerical evaluation. Thereafter, the samples were evaluated based on the average values of the panelists' scores. A greater numerical value indicates higher evaluation.

### (Results)

Table 4 indicates the saccharide compositions, turbidities and viscosities of the respective samples. FIG. 3 summarizes the sensory evaluation results of the samples. FIGs. 3-1, 3-2, 3-3, 3-4, 3-5 and 3-6 show sensory evaluation results of "sweetness," "sourness," "feeling of richness," "appearance," "deliciousness" and "comprehensive evaluation," respectively.

**[Table 4]**

| Section | | | Saccharide composition (%) | | | Turbidity | Viscosity (mPa/s) |
|---|---|---|---|---|---|---|---|
| | | | Monosaccharide | Disaccharide | Oligosaccharide | | |
| Control (with no enzyme treatment) | | Control section | 51.2 | 48.8 | 0.0 | 596 | 1.942 |
| Category A 7-8% | SP-L | Comparative Example | 56.5 | 35.6 | 7.8 | 20 | 1.308 |
| | Visco | Comparative Example | 54.1 | 39.1 | 6.8 | 15 | 1.312 |
| | AJ | Example | 53.9 | 39.5 | 6.6 | 500 | 1.765 |
| | AB | Example | 55.1 | 36.7 | 8.2 | 484 | 1.720 |
| Category B 12-15% | SP-L | Comparative Example | 60.8 | 26.3 | 12.8 | 22 | 1.311 |
| | Visco | Comparative Example | 60.0 | 22.7 | 17.3 | 15 | 1.311 |
| | AJ | Example | 59.8 | 23.7 | 16.5 | 418 | 1.588 |
| | AB | Example | 57.7 | 31.4 | 11.0 | 453 | 1.659 |
| Category C 17-20% | SP-L | Comparative Example | 63.1 | 18.7 | 18.2 | 25 | 1.319 |
| | Visco | Comparative Example | 61.6 | 20.9 | 17.4 | 33 | 1.316 |
| | AJ | Example | 61.1 | 22.3 | 16.7 | 492 | 1.569 |
| | AB | Example | 61.8 | 20.5 | 17.7 | 494 | 1.559 |

As a result of the final analysis of the saccharide compositions of the tasted samples, among the samples adjusted to have an oligosaccharide concentration of 12% to 15% in (2), the samples prepared by using "AJ" and "Visco" had a higher oligosaccharide concentration than expected while about 6% to 18% of fructooligosaccharide, in the saccharide composition, was produced for the respective crude enzyme preparations. The samples, which had been prepared through the reaction with "SP-L" or "Visco" having pectinase activity, were clarified irrespective of the reaction time, i.e., the degree of enzyme treatment, and had significantly lowered turbidity. On the other hand, "AJ" and "AB" maintained 70% or more of turbidity relative to the control section in all of the samples. In this test, the viscosity was also measured. The samples prepared through the reaction with "SP-L" or "Visco" exhibited reduction in viscosity to about 1.3 mPa/s irrespective of the reaction time, and it is considered that pectin contained in the fruit juice was almost degraded. On the other hand, the viscosities of the samples prepared by using "AJ" or "AB" were observed to have the tendency of reducing with the reaction time, but were maintained within the range of 1.77 to 1.57 mPa/s like the turbidity.

As a result of the sensory evaluation, the "sweetness" showed high correlation with the residual sucrose amount in the saccharide composition, and lowered as the reaction time was longer. Also, it can be understood that sourness is inversely correlated with sweetness, and that, as sweetness lowers, sourness is easily perceived. Sweetness and sourness are affected by the enzyme reaction time, i.e., the degree of consumption of sucrose, and thus are exclusively correlated with the FTase treatment level. So, sweetness and sourness were not so different depending on the type of the crude enzyme preparation. On the other hand, the feeling of richness was well correlated with the turbidity and viscosity. It was confirmed that the feeling of richness tends to lower when "SP-L" and "Visco" were used and to be maintained when "AJ" and "AB" were used. The "appearance" when "AJ" and "AB" were used was comparable to that of the Control. As regards the "deliciousness," the samples when "AJ" and "AB" were used, under Category A, showed higher results than the Control. The presence of panelists who did not like sweet juice but liked non-sweet juice was considered to have great influence on the results. The "deliciousness" lowers with decrease in sucrose concentration as the reaction progresses, and thus is considered to be greatly affected by the "sweetness." However, "AJ" and "AB" maintained deliciousness as compared with "SP-L" and "Visco." This is considered to be because the feeling of richness, which was well maintained by "AJ" and "AB," greatly affected the determination of the "deliciousness." Also, in the comprehensive evaluation including the "appearance," this difference became more prominent.

### <Test 6: Evaluation and sensory evaluation of vegetable juice>

The effect of the FTase crude enzyme preparation treatment on vegetable juice was evaluated in the same way as in Test 5.

### (Method)

The three crude enzyme preparations, SP-L and crude enzyme preparations AJ and AB produced by the present inventors, were used. The crude enzyme preparations were each added to 120 ml of concentrated carrot juice having Brix 33° so as to attain 1 U/ml, thereby causing a reaction at 25°C for 24 hours. The juice liquids were diluted with water to Brix 6 which was equivalent to that of 100% vegetable juice to prepare three samples, in total. The samples were each put in a bottle, and retained for 10 minutes after the temperature thereof arrived at 80°C in a water bath, for deactivation of the enzyme activity. Carrot juice with no enzyme treatment adjusted to have Brix 6° was used as the control section.

### (Measurement and sensory evaluation)

The measurement of the saccharide compositions, turbidities and viscosities of the samples to be tasted were carried out in the same way as in Test 5. The clarification was assessed in the same way as in Test 1, provided that since carrot exhibits high turbidity, the turbidity was calculated by diluting each of the samples five times, then centrifuging the diluted sample, measuring the OD of the supernatant, and then quintupling the numerical value. The sensory evaluation was made only for the feeling of richness. Three trained panelists evaluated the feeling of richness based on comparison with the control section. The feeling of richness was ranked as ⊚: Equivalent feeling of richness was maintained; ○ Reduction in feeling of richness was suppressed; Δ: Feeling of richness was reduced; and ×: Feeling of richness was greatly reduced.

### (Results)

Table 5 indicates the saccharide compositions, turbidities, viscosities, clarification levels, and sensory evaluation results of the feeling of richness, of the respective samples.

**[Table 5]**

| Kind of juice | Section | Saccharide composition (% concentration) | | | Turbidity | Viscosity (mPa/s) | Clarification | Feeling of richness |
|---|---|---|---|---|---|---|---|---|
| | | Monosaccharide | Disaccharide | Oligosaccharide | | | | |
| Carrot | Control | 18.6 | 81.4 | 0.0 | 646 | 1.21 | Not clarified | ⊚ |
| | SP-L | 37.4 | 16.3 | 46.2 | 702 | 1.09 | Not clarified | × |
| | AJ | 35.0 | 14.4 | 50.6 | 648 | 1.22 | Not clarified | ○ |
| | AB | 39.4 | 9.2 | 51.5 | 617 | 1.18 | Not clarified | ○ |

Also in the case of carrot, the production of fructooligosaccharide from the disaccharide (sucrose) was observed when all of the crude enzyme preparations were used. Carrot is known to contain a large amount of sucrose as compared with fruit juice of orange, grapefruit and apple, and a large amount of fructooligosaccharide was produced also in this test. In the case of carrot, unlike the test examples of fruit juice, no great difference in turbidity was observed between "SP-L" and "AJ" or "AB." Also in appearance, no clarification was observed in any of the experimental sections including "SP-L."

However, "AJ" and "AB" maintained a viscosity which was almost equivalent to that of the Control," but, on the other hand, the turbidity was clearly reduced in the case of "SP-L." The feeling of richness, when evaluated, was somewhat reduced in the case of "AJ" and "AB," but fell within the acceptable range as compared with the Control, as can be expected from the measurement values. In contrast to this, the feeling of richness was clearly reduced in the case of "SP-L." It is considered that somewhat reduction in feeling of richness due to the treatment with the crude enzyme preparations "AJ" and "AB" would be unavoidable since sweetness lowered due to the consumption of sucrose.

### <Test 7: Enzyme treatment of other fruit juice and vegetable juice>

In order to confirm that this technique is not limited to specific fruit juice and vegetable juice uses, but is applicable to a wide range of fruit juice and vegetable juice containing sucrose, the effects of the FTase crude enzyme preparation treatment in squeezed liquids of mango, pumpkin and corn were evaluated.

### (Method)

The respective liquids were adjusted to have Brix 33°, and the crude enzyme preparation AJ was added so as to attain 1 U/ml. After reaction at 25°C for 24 hours, the enzyme was deactivated by a method similar to that used in Test 6. The liquids of pumpkin and corn were adjusted to Brix values which were equivalent to that of the undiluted liquids thereof (3.5 and 15, respectively), and the liquid of mango was adjusted to have Brix 5°. Then, the saccharide composition, turbidity and viscosity were measured in the same way as in Test 5. The clarification was assessed in the same way as in Test 1.

### (Results)

Table 6 indicates the saccharide compositions, turbidities, viscosities and clarification levels of the respective kinds of fruit juice and vegetable juices.

**[Table 6]**

| | | Saccharide composition (% concentration) | | | Turbidity | Viscosity (mPa/s) | Clarification |
|---|---|---|---|---|---|---|---|
| | | Monosaccharide | Disaccharide | Oligosaccharide | | | |
| Mango | Before treatment | 67.3 | 32.7 | 0.0 | 437 | 3.56 | Not clarified |
| | After treatment | 71.1 | 20.7 | 8.2 | 471 | 3.29 | Not clarified |
| Pumpkin | Before treatment | 40.2 | 59.8 | 0.0 | 386 | 1.31 | Not clarified |
| | After treatment | 43.9 | 37.2 | 18.9 | 411 | 1.31 | Not clarified |
| Corn | Before treatment | 28.1 | 63.5 | 8.4 | 298 | 1.98 | Not clarified |
| | After treatment | 40.5 | 22.5 | 37.0 | 275 | 1.98 | Not clarified |

The production of fructooligosaccharide according to the proportion of sucrose was confirmed in all the kinds of fruit juice and vegetable juice that were evaluated in Test 7. The turbidity and viscosity were not or little reduced. Also, clarification was not observed. From these results, it was considered that this technique is applicable not only to orange or carrot, but also to a wide range of fruit juice and vegetable juice containing sucrose.

The present disclosure provides a reduced-calorie fruit juice or vegetable juice beverage obtained by reducing the calorie of a fruit juice or vegetable juice beverage such as a 100% fruit juice or vegetable juice beverage while maintaining the flavor and juice liquid properties of fruit juice or vegetable juice.

## Claims

1. A method for producing a reduced-calorie fruit juice or vegetable juice beverage, comprising treating fruit juice or vegetable juice with a crude enzyme preparation of fructosyl transferase having substantially no pectinase activity, wherein the crude enzyme preparation is regarded as having substantially no pectinase activity, when fructo-oligosaccharide is produced at a proportion of 10% or more of the saccharide composition and, additionally, when the turbidity after treatment is maintained at 35% or more of the turbidity before treatment.

2. A method for reducing the calorie of fruit juice or vegetable juice, comprising treating fruit juice or vegetable juice with a crude enzyme preparation of fructosyl transferase having substantially no pectinase activity, wherein the crude enzyme preparation is regarded as having substantially no pectinase activity, when fructo-oligosaccharide is produced at a proportion of 10% or more of the saccharide composition and, additionally, when the turbidity after treatment is maintained at 35% or more of the turbidity before treatment, thereby producing a fructooligosaccharide from sucrose that is contained in the fruit juice or vegetable juice.

3. The method according to claim 1 or claim 2, wherein the reduced-calorie fruit juice or vegetable juice beverage is a 100% fruit juice or vegetable juice beverage.

4. The method according to any one of claims 1 to 3, wherein the crude enzyme preparation to be used in the production of the reduced-calorie fruit juice or vegetable juice beverage is a crude enzyme preparation of fructosyl transferase having the activity of producing a fructooligosaccharide from sucrose and having substantially no pectinase activity.

5. The method according to any one of claims 1 to 4, wherein the fruit juice or vegetable juice includes one or more kinds of fruit juice or vegetable juice selected from orange juice, grapefruit juice, apple juice and carrot juice.

6. The method according to any one of claims 1 to 5, wherein the reduced-calorie fruit juice or vegetable juice beverage is a packaged fruit juice or vegetable juice beverage.

7. The method according to any one of claims 1 to 6, wherein the beverage is furthermore prepared as a packaged beverage filled and sterilized in a PET bottle or a paper container.

## Patentansprüche

1. Verfahren zum Produzieren eines Fruchtsaft- oder Gemüsesaftgetränks mit reduzierten Kalorien, umfassend das Behandeln von Fruchtsaft oder Gemüsesaft mit einer Rohenzymzubereitung von Fructosyltransferase, die im Wesentlichen keine Pektinaseaktivität aufweist, wobei die Rohenzymzubereitung als im Wesentlichen keine Pektinaseaktivität aufweisend betrachtet wird, wenn Fructooligosaccharid in einem Anteil von 10% oder mehr der Saccharidzusammensetzung produziert wird, und zusätzlich, wenn die Trübung nach Behandlung bei 35% oder mehr der Trübung vor der Behandlung aufrechterhalten wird.

2. Verfahren zum Reduzieren der Kalorien von Fruchtsaft oder Gemüsesaft, umfassend das Behandeln von Fruchtsaft oder Gemüsesaft mit einer Rohenzymzubereitung von Fructosyltransferase, die im Wesentlichen keine Pektinaseaktivität aufweist, wobei die Rohenzymzubereitung als im Wesentlichen keine Pektinaseaktivität aufweisend betrachtet wird, wenn Fructooligosaccharid in einem Anteil von 10% oder mehr der Saccharidzusammensetzung produziert wird, und zusätzlich, wenn die Trübung nach Behandlung bei 35% oder mehr der Trübung vor der Behandlung aufrechterhalten wird, und dadurch Produzieren eines Fructooligosaccharids aus Saccharose, die in dem Fruchtsaft oder Gemüsesaft enthalten ist.

3. Verfahren gemäß Anspruch 1 oder Anspruch 2, wobei das Fruchtsaft- oder Gemüsesaftgetränk mit reduzierten Kalorien zu 100% ein Fruchtsaft- oder Gemüsesaftgetränk ist.

4. Verfahren gemäß irgendeinem der Ansprüche 1 bis 3, wobei die Rohenzymzubereitung zur Verwendung bei der Produktion des Fruchtsaft- oder Gemüsesaftgetränks mit reduzierten Kalorien eine Rohenzymzubereitung von Fructosyltransferase ist, die die Aktivität der Produktion eines Fructooligosaccharids aus Saccharose aufweist und im Wesentlichen keine Pektinaseaktivität aufweist.

5. Verfahren gemäß irgendeinem der Ansprüche 1 bis 4, wobei der Fruchtsaft oder Gemüsesaft eine oder mehrere Arten von Fruchtsaft oder Gemüsesaft einschließt, ausgewählt aus Orangensaft, Grapefruitsaft, Apfelsaft und Karottensaft.

6. Verfahren gemäß irgendeinem der Ansprüche 1 bis 5, wobei das Fruchtsaft- oder Gemüsesaftgetränk mit reduzierten Kalorien ein abgepacktes Fruchtsaft- oder Gemüsesaftgetränk ist.

7. Verfahren gemäß irgendeinem der Ansprüche 1 bis 6, wobei das Getränk weiterhin als abgepacktes Getränk, abgefüllt und sterilisiert in eine(r) PET-Flasche oder einem Papierbehälter, hergestellt wird.

## Revendications

1. Procédé de production d'une boisson de jus de fruits ou de jus de légumes allégée en calories, comprenant le traitement d'un jus de fruits ou d'un jus de légumes avec une préparation d'enzyme brute de fructosyle transférase n'ayant sensiblement aucune activité de pectinase, dans lequel la préparation d'enzyme brute est considérée comme n'ayant sensiblement aucune activité de pectinase, lorsque du fructo-oligosaccharide est produit à une proportion de 10 % ou plus de la composition de saccharide et, en outre, lorsque la turbidité après le traitement est maintenue à 35 % ou plus de la turbidité avant le traitement.

2. Procédé d'allègement des calories d'un jus de fruits ou d'un jus de légumes, comprenant le traitement d'un jus de fruits ou d'un jus de légumes avec une préparation d'enzyme brute de fructosyle transférase n'ayant sensiblement aucune activité de pectinase, dans lequel la préparation d'enzyme brute est considérée comme n'ayant sensiblement aucune activité de pectinase, lorsque du fructo-oligosaccharide est produit à une proportion de 10 % ou plus de la composition de saccharide et, en outre, lorsque la turbidité après le traitement est maintenue à 35 % ou plus de la turbidité avant le traitement, produisant ainsi un fructo-oligosaccharide à partir du saccharose qui est contenu dans le jus de fruits ou le jus de légumes.

3. Procédé selon la revendication 1 ou la revendication 2, dans lequel la boisson de jus de fruits ou de jus de légumes allégée en calories est une boisson composée à 100 % de jus de fruits ou de jus de légumes.

4. Procédé selon l'une quelconque des revendications 1 à 3, dans lequel la préparation d'enzyme brute à utiliser dans la production de la boisson de jus de fruits ou de jus de légumes allégée en calories est une préparation d'enzyme brute de fructosyle transférase ayant l'activité qui consiste à produire un fructo-oligosaccharide à partir du saccharose et n'ayant sensiblement aucune activité de pectinase.

5. Procédé selon l'une quelconque des revendications 1 à 4, dans lequel le jus de fruits ou le jus de légumes inclut un ou plusieurs types de jus de fruits ou de jus de légumes choisis parmi du jus d'orange, du jus de pamplemousse, du jus de pomme et du jus de carotte.

6. Procédé selon l'une quelconque des revendications 1 à 5, dans lequel la boisson de jus de fruits ou de jus de légumes allégée en calories est une boisson de jus de fruits ou de jus de légumes conditionnée.

7. Procédé selon l'une quelconque des revendications 1 à 6, dans lequel la boisson est préparée en outre en tant que boisson conditionnée remplie et stérilisée dans une bouteille en PET ou un contenant en carton.
